# EUROPEAN PATENT APPLICATION

(11) **EP 4 803 779 A1**
(43) Date of publication of application: **09.09.2026**
(21) Application number: 24894045.4
(22) Date of filing: 12.11.2024
(51) Int. Cl.: F16H 25/24, F16H 25/22

(54) **NUT FOR BALL SCREW DEVICE, METHOD FOR MANUFACTURING NUT FOR BALL SCREW DEVICE, AND BALL SCREW DEVICE**

(30) Priority: 24.11.2023 JP 2023198817
(71) Applicant: NSK Ltd., Tokyo 141-8560 (JP)
(72) Inventor: SATO Kanta, Fujisawa-shi, Kanagawa 251-8501 (JP); WATANABE Yasumi, Fujisawa-shi, Kanagawa 251-8501 (JP)
(74) Representative: Müller-Boré & Partner Patentanwälte PartG mbB
(86) International application number: PCT/JP2024/040108
(87) International publication number: WO 2025/110053

(57) **Abstract**

A nut for a ball screw device that can improve slidability of an outer circumferential surface thereof and can ensure fatigue strength of a nut-side ball screw groove is provided. A nut 3 includes an outer circumferential surface 10 having a sliding surface 21; and an inner circumferential surface 11 having a portion where a nut-side ball screw groove 12 is provided, wherein at least the sliding surface 21 of the outer circumferential surface 10 has a compound layer 17, and at least a portion of the inner circumferential surface 11 where the nut-side ball screw groove 12 is provided has a diffusion layer 16.

## Description

### TECHNICAL FIELD

The present disclosure relates to a nut for a ball screw device, a method for manufacturing the nut for a ball screw device, and a ball screw device.

### BACKGROUND ART

Since a ball screw device causes balls to roll between a screw shaft and a nut, higher efficiency can be obtained as compared with a sliding screw device in which the screw shaft and the nut are brought into direct contact with each other. For this reason, the ball screw device is incorporated into various mechanical devices, such as an electric brake device for an automobile, an automated manual transmission (AMT), and a positioning device of a machine tool, in order to convert rotational motion of a drive source such as an electric motor into linear motion.

A ball screw device has a screw shaft having a shaft-side ball screw groove on an outer circumferential surface thereof; a nut having a nut-side ball screw groove on an inner circumferential surface thereof; and a plurality of balls arranged between the shaft-side ball screw groove and the nut-side ball screw groove.

In a ball screw device, depending on an application, one of the screw shaft and the nut is used as a rotational motion element, and the other of the screw shaft and the nut is used as a linear motion element. For example, JP2004-502097A discloses that a ball screw device is incorporated into a brake device, in which the screw shaft is used as a rotational motion element and the nut is used as a linear motion element.

### CITATION LIST

### PATENT LITERATURE

Patent Literature 1: JP2004-502097A

### SUMMARY OF INVENTION

### TECHNICAL PROBLEM

JP2004-502097A discloses a structure in which a nut of a ball screw device is used as a piston of a brake device, and the nut slides inside a cylinder of the brake device.

In a case where an outer circumferential surface of a nut is used as a sliding surface as in the ball screw device described in JP2004-502097A, high slidability is required for the outer circumferential surface of the nut. Further, in a case where a part of the outer circumferential surface of the nut is used in a state of being exposed from a cylinder as in the ball screw device described in JP2004-502097A, the outer circumferential surface of the nut comes into contact with outside air, and corrosion is likely to occur. When such corrosion occurs, it causes a decrease in slidability of the outer circumferential surface of the nut. Therefore, in a case where the nut is used in an application in which the outer circumferential surface thereof is exposed to outside air, it is also required to prevent corrosion.

On the other hand, since the nut-side ball screw groove provided on the inner circumferential surface of the nut receive repeated loads from the balls, sufficient fatigue strength is required.

An object of the present disclosure is to provide a nut for a ball screw device that can improve slidability of the outer circumferential surface thereof and can ensure fatigue strength of the nut-side ball screw groove.

### SOLUTION TO PROBLEM

A nut for a ball screw device according to an aspect of the present disclosure, comprises an outer circumferential surface having a sliding surface; and an inner circumferential surface provided with a nut-side ball screw groove, and at least the sliding surface of the outer circumferential surface has a compound layer and at least a portion of the inner circumferential surface where the nut-side ball screw groove is provided has a diffusion layer.

In the nut for the ball screw device according to an aspect of the present disclosure, a diffusion layer can further exist on an inner side in a radial direction of the compound layer.

The nut for the ball screw device according to an aspect of the present disclosure can have a bottomed cylindrical shape.

The nut for the ball screw device according to an aspect of the present disclosure can have a bottomless cylindrical shape.

The nut for the ball screw device according to an aspect of the present disclosure can have a circulation groove on the inner circumferential surface.

In the nut for the ball screw device according to an aspect of the present disclosure, the outer circumferential surface can entirely have the compound layer.

A ball screw device according to an aspect of the present disclosure comprises: a screw shaft having a shaft-side ball screw groove on an outer circumferential surface thereof and rotationally moves during use; a nut having a nut-side ball screw groove on an inner circumferential surface thereof and linearly moves during use; and a plurality of balls arranged between the shaft-side ball screw groove and the nut-side ball screw groove, and the nut is composed of a nut according to an aspect of the present disclosure.

A method for manufacturing a nut for a ball screw device according to an aspect of the present disclosure, comprising:
a step of forming a diffusion layer on a first intermediate material that has a nut-side ball screw groove formed on an inner circumferential surface thereof at least in a portion of the inner circumferential surface where the nut-side ball screw groove is provided and at least a portion of an outer circumferential surface of the first intermediate material, to obtain a second intermediate material, and
a step of forming a compound layer on an outer side in a radial direction of the diffusion layer provided on an outer circumferential surface of the second intermediate material, in a state where at least an inner circumferential surface of the second intermediate material does not come into contact with a furnace atmosphere.

In a method for manufacturing a nut for the ball screw device according to an aspect of the present disclosure,
the diffusion layer is formed by performing a gas nitriding process on the first intermediate material; and
the compound layer is formed by performing a gas soft-nitriding process on the second intermediate material.

### EFFECT OF INVENTION

With the nut for a ball screw device of the present disclosure, slidability of the outer circumferential surface can be improved, and fatigue strength of the nut-side ball screw groove can be ensured.

### BRIEF DESCRIPTION OF DRAWINGS

[FIG. 1] FIG. 1 is a cross-sectional view illustrating a ball screw device of a first example of an embodiment of the present disclosure.
[FIG. 2] FIG. 2 is a cross-sectional view illustrating a nut of the first example.
[FIG. 3] FIG. 3 is a schematic enlarged view illustrating a portion A of FIG. 2.
[FIG. 4] FIG. 4(A) to FIG. 4(D) are schematic cross-sectional views illustrating manufacturing processes of the nut of the first example in order of processing steps.
[FIG. 5] FIG. 5 is a view corresponding to FIG. 1, illustrating a second example of an embodiment of the present disclosure.
[FIG. 6] FIG. 6 is a view corresponding to FIG. 2, illustrating the second example.
[FIG. 7] FIG. 7(A) to FIG. 7(D) are views corresponding to FIG. 4(A) to FIG. 4(D), illustrating the second example.

### DESCRIPTION OF EMBODIMENTS

### [First Example]

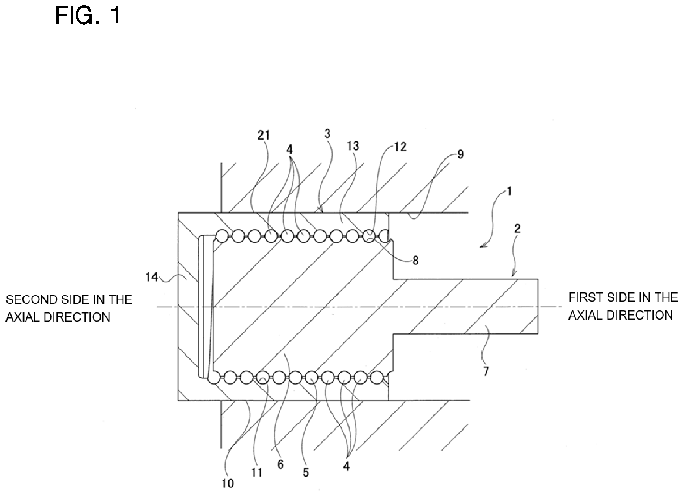

A first example of an embodiment of the present disclosure will be described with reference to FIG. 1 to FIG. 4.

### [Overall Configuration of Ball Screw Device]

The ball screw device 1 of the present example is incorporated into, for example, an electro-hydraulic brake (EHB) or an electro-mechanical brake (EMB), and is used for an application of converting rotational motion of an electric motor serving as a drive source into linear motion.

The ball screw device 1 includes a screw shaft 2 that has a shaft-side ball screw groove 8 on an outer circumferential surface thereof and rotates during use; a nut 3 that has a nut-side ball screw groove 12 on an inner circumferential surface 11 and moves linearly during use; and a plurality of balls (steel balls) 4 arranged between the shaft-side ball screw groove 8 and the nut-side ball screw groove 12.

The screw shaft 2 is a rotational motion element that is rotationally driven by an electric motor serving as a drive source through a speed-reducing mechanism or the like and rotationally moves during use. The screw shaft 2 is inserted into an inside of the nut 3 and is arranged so as to be coaxial with the nut 3. The nut 3 is a linear motion element that is prevented from rotating together with the screw shaft 2 by a rotation preventing mechanism (not illustrated), and moves linearly during use. Therefore, the ball screw device 1 of the present example is used in a manner in which the screw shaft 2 is rotationally driven and the nut 3 is caused to move linearly.

A helical load path 5 is composed of the shaft-side ball screw groove 8 and the nut-side ball screw groove 12, and is provided between the outer circumferential surface of the screw shaft 2 and an inner circumferential surface of the nut 3. A plurality of balls 4 are arranged in the load path 5 so as to be able to roll. When the screw shaft 2 and the nut 3 are relatively rotated, the balls 4 that have reached an end point of the load path 5 are returned to a start point of the load path 5 through a circulation groove (not illustrated) formed on the outer circumferential surface of the screw shaft 2. In the following, a structure of each component of the ball screw device 1 will be described.

In the following description, the axial direction, the radial direction, and the circumferential direction refer to the axial direction, the radial direction, and the circumferential direction of the screw shaft 2 and the nut 3 unless otherwise specified. In addition, a first side in the axial direction refers to a right side in FIG. 1 to FIG. 4, and a second side in the axial direction refers to a left side in FIG. 1 to FIG. 4.

### <Screw Shaft>

The screw shaft 2 of the present example is made of metal and has a screw portion 6 and a fitting shaft portion 7 arranged adjacent to the screw portion 6 on the first side in the axial direction. The screw portion 6 and the fitting shaft portion 7 are arranged so as to be coaxial with each other and are integrally configured. The fitting shaft portion 7 has an outer diameter smaller than that of the screw portion 6.

The screw portion 6 has a helical shaft-side ball screw groove 8 and a circulation groove (not illustrated) on an outer circumferential surface thereof. The shaft-side ball screw groove 8 is formed by performing a grinding process, a cutting process, or a rolling process on the outer circumferential surface of the screw portion 6. In the present example, the number of threads of the shaft-side ball screw groove 8 is one. A groove shape (groove bottom shape) of a cross section of the shaft-side ball screw groove 8 is a gothic arch groove or a circular arc groove. The outer circumferential surface of the screw portion 6 includes at least the shaft-side ball screw groove 8 and does not need to include the circulation groove.

The circulation groove has a substantially S-shape and smoothly connects portions of the shaft-side ball screw groove 8 that are adjacent to each other in the axial direction, thereby connecting a start point and an end point of the load path 5. As a result, the balls 4 that have reached the end point of the load path 5 are returned to the start point of the load path 5 through the circulation groove. The start point and the end point of the load path 5 are switched depending on a direction of relative displacement (relative rotational direction) between the screw shaft 2 and the nut 3 in the axial direction.

The circulation groove has a substantially semicircular cross-sectional shape. The circulation groove has a groove width slightly larger than a diameter of the balls 4 and has a groove depth that allows the balls 4 moving through the circulation groove to get over thread peaks of the nut-side ball screw groove 12 that will be described later.

The circulation groove can be formed directly on the outer circumferential surface of the screw portion 6. Alternatively, the circulation groove can be formed on the outer circumferential surface of the screw portion 6 by providing a mounting hole on the outer circumferential surface of the screw portion 6 and fixing a circulation component comprising the circulation groove to an inside of the mounting hole. In the present example, the circulation groove is formed on the outer circumferential surface of the screw portion 6 by, for example, a cutting process.

A spur gear of the speed-reducing mechanism for rotationally driving the screw shaft 2, a carrier of a planetary gear, or the like is fixed to the fitting shaft portion 7 so that there is no relative rotation, or a rotating shaft of a motor is directly connected to the fitting shaft portion 7.

### <Nut>

The nut 3 is made of alloy steel, is slidably fitted into a cylinder 9 of the electro-hydraulic brake or the electro-mechanical brake, and functions as a piston. In the present example, during use of the ball screw device 1, an end portion on the second side in the axial direction of the nut 3 is exposed to the outside from the cylinder 9.

The nut 3 has an outer circumferential surface 10 and an inner circumferential surface 11.

The outer circumferential surface 10 of the nut 3 is formed in a cylindrical surface shape. The outer circumferential surface 10 of the nut 3 has a sliding surface 21 that slides in the axial direction relative to the inner circumferential surface of the cylinder 9. A seal ring (not illustrated) is provided between a portion of the outer circumferential surface 10 of the nut 3 that is shifted from the sliding surface 21 and the inner circumferential surface of the cylinder 9. In addition, a boot (not illustrated) can also be provided so as to bridge a portion of the outer circumferential surface 10 of the nut 3 that is exposed to he outside from the cylinder 9 and an opening edge portion of the cylinder 9.

The inner circumferential surface 11 of the nut 3 faces, over an entire circumference, the outer circumferential surface of the screw portion 6 of the screw shaft 2 with a gap in the radial direction interposed therebetween. In the present example, the inner circumferential surface 11 of the nut 3 has the helical nut-side ball screw groove 12 and the thread peaks provided between adjacent pasts of the nut-side ball screw groove 12. It is also possible to provide a circulation groove on the inner circumferential surface 11 of the nut 3 without providing a circulation groove on the outer circumferential surface of the screw shaft 2. In this case, the circulation groove can be formed directly on the inner circumferential surface 11 of the nut 3, or the circulation groove can be provided on the inner circumferential surface 11 of the nut 3 by fixing the circulation component comprising the circulation groove to a mounting hole formed in the nut 3.

The nut-side ball screw groove 12 is formed by performing, for example, a grinding process, a cutting process, a rolling tapping process, or a cutting tapping process on the inner circumferential surface 11 of the nut 3. The nut-side ball screw groove 12 has the same lead as that of the shaft-side ball screw groove 8.

In a state where the screw portion 6 of the screw shaft 2 is inserted and arranged inside the nut 3, the shaft-side ball screw groove 8 and the nut-side ball screw groove 12 are arranged so as to face each other in the radial direction to configure the load path 5. In the present example, the number of threads of the nut-side ball screw groove 12 is one, same as that of the shaft-side ball screw groove 8. A groove shape of a cross section of the nut-side ball screw groove 12 is also a gothic arch groove or a circular arc groove, same as that of the shaft-side ball screw groove 8.

A shape of the nut 3 is arbitrary as long as the nut 3 has at least the outer circumferential surface 10 and the inner circumferential surface 11, and comprises at least a bottomed cylindrical shape or a bottomless cylindrical shape.

The nut 3 of the present example is configured by a cap nut having a bottomed cylindrical shape, and includes a cylindrical portion 13 having a cylindrical shape and a bottom portion 14 having a disk shape and closing an end opening portion on the second side in the axial direction of the cylindrical portion 13.

The nut 3 has a compound layer 17 on at least the sliding surface 21 of the outer circumferential surface 10 thereof and has a diffusion layer 16 on at least a portion of the inner circumferential surface 11 thereof where the nut-side ball screw groove 12 is provided.

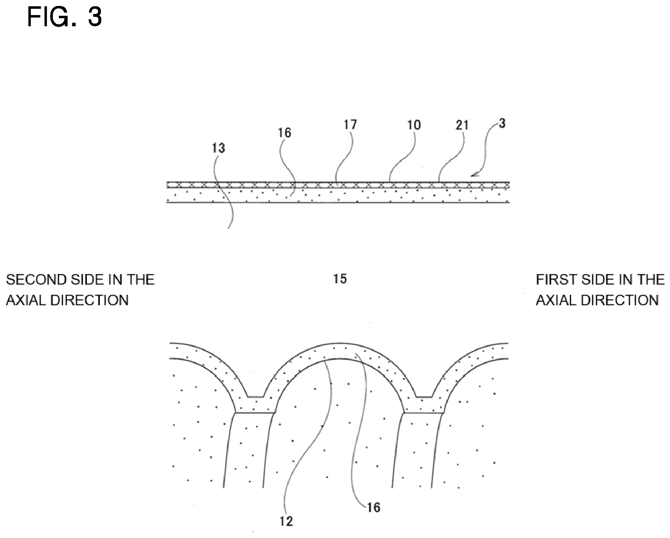

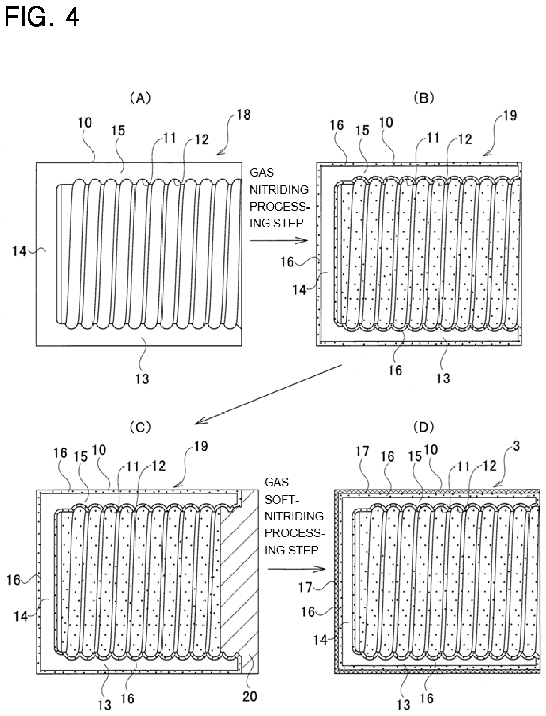

More specifically, as schematically illustrated in FIG. 3 and FIG. 4 (D), the nut 3 has a base material 15, the diffusion layer 16, and the compound layer 17. In FIG. 3 and FIG. 4 (D), the base material 15 is represented by a plain pattern, the diffusion layer 16 is represented by a pin dot pattern, and the compound layer 17 is represented by a diagonal plus pattern. Further, in FIG. 3 and FIG. 4 (D), thicknesses of the diffusion layer 16 and the compound layer 17 are illustrated in an exaggerated manner.

The compound layer 17 needs to be formed at least on the sliding surface 21 of the outer circumferential surface 10 of the nut 3 where slidability is required. In a case where the entire outer circumferential surface 10 of the nut 3 configures the sliding surface 21, the compound layer 17 is formed on the entire outer circumferential surface 10 of the nut 3. In a case where the outer circumferential surface of the nut 3 comprises a portion that does not function as the sliding surface 21, it is not necessary to form the compound layer 17 on this portion. However, also in this case, the compound layer 17 can be formed on the entire outer circumferential surface 10. The diffusion layer 16 exists on an inner side in the radial direction of (underneath) the compound layer 17.

The diffusion layer 16 needs to be formed at least on a portion of the inner circumferential surface 11 of the nut 3 where the nut-side ball screw groove 12 is provided and where sufficient fatigue strength is required. The diffusion layer 16 does not need to be formed on a portion of the inner circumferential surface 11 of the nut 3 where the nut-side ball screw groove 12 is not provided. However, the diffusion layer 16 can also be formed on the entire inner circumferential surface 11 of the nut 3 including this portion.

In the present example, the entire outer circumferential surface 10 of the nut 3 has the compound layer 17. That is, the outer circumferential surface 10 of the nut 3 is composed of a cylindrical surface in which an outer diameter thereof does not change over an entire length in the axial direction, and since the entire outer circumferential surface 10 functions as the sliding surface 21, the entire outer circumferential surface 10 has the compound layer 17.

In the nut 3 of the present example, a side surface on the second side in the axial direction of the bottom portion 14 configuring an outer bottom surface also has the compound layer 17. However, in a case of implementing the present disclosure, the side surface on the second side in the axial direction of the bottom portion 14 configuring the outer bottom surface of the nut 3 does not need to have the compound layer 17. That is, this portion may be composed of the diffusion layer 16 or may be composed of a surface of the base material 15.

In the present example, of the nut 3, the entire inner circumferential surface 11 including a portion where the nut-side ball screw groove 12 is formed has the diffusion layer 16.

In the nut 3 of the present example, a side surface on the first side in the axial direction of the bottom portion 14 configuring an inner bottom surface and an end surface on the first side in the axial direction of the cylindrical portion 13 also have the diffusion layer 16. However, in a case of implementing the present disclosure, the side surface on the first side in the axial direction of the bottom portion 14 configuring the inner bottom surface of the nut 3 and the end surface on the first side in the axial direction of the cylindrical portion 13 do not need to have the diffusion layer 16. That is, these portions can be composed of the surface of the base material 15.

The base material 15 corresponds to a so-called core portion. The base material 15 refers to a region that is not affected by nitrogen that has penetrated by a gas nitriding process which will be described later. Of the nut 3, a portion excluding the diffusion layer 16 and the compound layer 17 is the base material 15.

A chemical composition of the base material 15 is not particularly limited. As the base material 15, for example, SCM420H can be used, which contains, in mass%, C of 0.17% or more and 0.23% or less, Si of 0.15% or more and 0.35% or less, Mn of 0.55% or more and 0.95% or less, P of 0.03% or less, S of 0.03% or less, Ni of 0.25% or less, Cr of 0.85% or more and 1.25% or less, Mo of 0.15% or more and 0.3% or less, and Cu of 0.3% or less, with a balance being Fe and impurities. As the base material 15, in addition to SCM420H, other materials such as SCr420H can also be used.

A hardness of the base material 15 is not particularly limited, however, it is preferable that the hardness is such that bending fatigue strength required for the nut 3 to function as a piston can be sufficiently ensured.

The diffusion layer 16 is formed on a surface of the base material 15. The diffusion layer 16 refers to a layer in which nitrogen is diffused (solid-solved) into a surface layer portion of a steel material and nitride-forming elements such as Cr and Al in components of the base material 15 form fine alloy nitrides.

A nitrogen concentration of the diffusion layer 16 is not particularly limited as long as it is higher than a nitrogen concentration of the base material 15.

A thickness of the diffusion layer 16 is not particularly limited. The thickness of the diffusion layer 16 varies depending on conditions of the gas nitriding process and is, for example, about 0.1 mm or more and 0.3 mm or less.

A hardness of the diffusion layer 16 is not particularly limited, however, for example, a Rockwell hardness at a surface of the diffusion layer 16 is preferably HRC 54 or more and more preferably HRC 58 or more. The diffusion layer 16 has a higher Rockwell hardness than the base material 15 and has a lower Rockwell hardness than the compound layer 17.

The diffusion layer 16 has high hardness and has superior toughness and higher impact resistance compared to the compound layer 17. For this reason, the diffusion layer 16 is suitable for configuring a portion where the nut-side ball screw groove 12 that receives repeated loads from the balls 4 is provided.

The compound layer 17 is formed on an outer side in the radial direction of (on the top of) the diffusion layer 16. The compound layer 17 refers to a layer (white layer) including compounds of iron and nitrogen (iron nitride compounds). The compounds of iron and nitrogen are, for example, ε (epsilon: Fe2-3N) compounds, γ' (gamma prime: Fe4N) compounds, and composite compounds thereof.

A thickness of the compound layer 17 is not particularly limited. The thickness of the compound layer 17 is sufficiently smaller than the thickness of the diffusion layer 16. The thickness of the compound layer 17 varies depending on conditions of a gas soft-nitriding process and is, for example, about 5 µm or more and 20 µm or less.

A hardness of the compound layer 17 is not particularly limited. However, for example, a Rockwell hardness at a surface of the compound layer 17 is preferably HRC 58 or more. The compound layer 17 has a higher Rockwell hardness than the diffusion layer 16.

The compound layer 17 has lower toughness and lower resistance to impact load compared to the diffusion layer 16, but has higher hardness and superior slidability. For this reason, the compound layer 17 is suitable for configuring the outer circumferential surface 10 including the sliding surface 21 of the nut 3 that slides relative to the inner circumferential surface of the cylinder 9.

In the present example, the outer circumferential surface 10 of the nut 3 is composed of the compound layer 17. However, in order to further improve corrosion resistance of the outer circumferential surface 10, an oxide film (oxide layer) of triiron tetroxide (Fe₃O₄) having a thickness of about several micrometers can also be formed on a surface layer of the compound layer 17.

### <Manufacturing Method of Nut>

In the present example, a method for manufacturing a nut for a ball screw device according to an example of the present disclosure is applied to obtain the nut 3 of the present example. In the following, a method for manufacturing the nut 3 of the present example will be described with reference to FIG. 4 (A) to FIG. 4 (D).

The method for manufacturing the nut 3 of the present example includes a shape processing step of manufacturing a first intermediate material 18 having the same dimensions and the same shape as those of the completed nut 3, a gas nitriding processing step, and a gas soft-nitriding processing step. Of these steps, the shape processing step is a pre-processing step corresponding to a preparation stage and is not part of the manufacturing method of the present disclosure.

### <Shape Processing Step>

In the shape processing step of the present example, the first intermediate material 18 illustrated in FIG. 4 (A) is obtained by performing a cutting process and/or a rolling process on a steel material (not illustrated) having the same chemical composition as that of the base material 15 of the nut 3. The first intermediate material 18 has the same dimensions and the same shape as those of the completed nut 3. The first intermediate material 18 is entirely composed of a metal having the same chemical composition as that of the base material 15 and does not include the diffusion layer 16 and the compound layer 17. In the shape processing step, a heat treatment process and a grinding process can also be additionally performed.

### <Gas Nitriding Processing Step>

In the gas nitriding processing step, a gas nitriding process is performed on the first intermediate material 18 while controlling a nitriding potential. As a result, as illustrated in FIG. 4 (B), a second intermediate material 19 in which an inner circumferential surface and an outer circumferential surface thereof are composed of the diffusion layer 16 is obtained. A specific example of conditions of the gas nitriding process is as follows.

A processing temperature in the gas nitriding process is preferably in a range of 500°C or more and 600°C or less. When the processing temperature is less than 500°C, it becomes difficult to sufficiently ensure a thickness of the diffusion layer 16. On the other hand, when the processing temperature exceeds 600°C, hard and brittle austenite is formed, and the diffusion layer 16 may not be stably formed.

A holding time at the above processing temperature is preferably 15 hours or more. When the processing time is less than 15 hours, a diffusion layer 16 having sufficient nitrogen concentration and thickness cannot be formed, and hardness of the diffusion layer 16 may be insufficient.

As an atmosphere in a furnace during the nitriding process, ammonia gas (NH₃) is used. During the nitriding process, atmosphere control is performed using the nitriding potential (K_{N}) as a parameter. Specifically, a hydrogen concentration in the furnace is continuously analyzed by an H₂ sensor, and a flow rate of NH₃ is controlled by a mass flow controller (MFC) so that a set K_{N} value is obtained.

By the gas nitriding process as described above, the second intermediate material 19 is obtained in which the compound layer 17 of the ε phase and γ' phase have not been formed on the steel surface. A surface of the second intermediate material 19 is composed only of a structure of the diffusion layer 16. In the present example, the diffusion layer 16 is formed on an entire outer circumferential surface and an entire inner circumferential surface of the second intermediate material 19. Furthermore, of the second intermediate material 19, the diffusion layer 16 is also formed on a side surface on the second side in the axial direction of the bottom portion 14 configuring the outer bottom surface; the side surface on the first side in the axial direction of the bottom portion 14 configuring the inner bottom surface; and the end surface on the first side in the axial direction of the cylindrical portion 13.

### <Gas Soft-Nitriding Processing Step>

In the gas soft-nitriding processing step, the gas soft-nitriding process is performed on the second intermediate material 19. As a result, in the present example, as illustrated in FIG. 4 (D), the compound layer 17 is formed on the outer side in the radial direction of the diffusion layer 16 configuring the outer circumferential surface 10 of the second intermediate material 19. However, in a case where the diffusion layer 16 is not formed on the outer circumferential surface 10 of the second intermediate material 19, the compound layer 17 can also be formed on a portion of the outer circumferential surface 10 that is composed of a surface of the base material 15. In this case as well, the diffusion layer 16 is formed on the inner side in the radial direction of the compound layer 17 by the gas soft-nitriding process. In this manner, the nut 3 is manufactured, which has the compound layer 17 on the outer circumferential surface 10 and in which the inner circumferential surface 11 including a portion where the nut-side ball screw groove 12 is provided has the diffusion layer 16.

In the present example, when performing the gas soft-nitriding process on the second intermediate material 19, it is necessary to prevent at least the inner circumferential surface of the second intermediate material 19 from being exposed to the atmosphere in the furnace. That is, the gas soft-nitriding process is performed on the second intermediate material 19 in a state where the portion of the diffusion layer 16 configuring the surface of the second intermediate material 19 on which the compound layer 17 is not desired to be formed is prevented from being exposed to the atmosphere in the furnace.

In the present example, since the second intermediate material 19 is configured by a cap nut having a bottomed cylindrical shape, the gas soft-nitriding process is performed so that the inner circumferential surface of the second intermediate material 19 and the side surface on the first side in the axial direction of the bottom portion 14 configuring the inner bottom surface are not exposed to the atmosphere in the furnace.

A method for preventing the inner circumferential surface of the second intermediate material 19 from being exposed to the atmosphere in the furnace is not particularly limited. However, in the present example, as illustrated in FIG. 4 (C), an end opening portion on the first side in the axial direction of the second intermediate material 19 is closed by a cover member 20, thereby preventing the atmosphere in the furnace from entering the inside of the second intermediate material 19. In the illustrated example, a screw portion formed on an outer circumferential surface of a small diameter shaft portion of the cover member 20 is screwed into the nut-side ball screw groove 12, and a large diameter shaft portion is brought into contact with an end surface on the first side in the axial direction of the second intermediate material 19, thereby closing the end opening portion on the first side in the axial direction of the second intermediate material 19. As a result, the inner circumferential surface of the second intermediate material 19 and the side surface on the first side in the axial direction of the bottom portion 14 configuring the inner bottom surface of the second intermediate material 19 are prevented from being exposed to the atmosphere in the furnace. Although illustration is omitted, the end opening portion on the first side in the axial direction of the second intermediate material can also be closed by forming an inner circumferential surface at an end portion on the first side in the axial direction of the second intermediate material in a cylindrical surface shape and press-fitting a cylindrical outer circumferential surface of the cover member into this portion. An example of specific conditions of the gas soft-nitriding process is as follows.

A processing temperature in the gas soft-nitriding process is preferably in a range of 500°C or more and 600°C or less. Although depending on a gas ratio in the furnace and a processing time, when the processing temperature is less than 500°C, it becomes difficult to form the compound layer 17 having a sufficient thickness. Since the gas soft-nitriding process has a relatively low processing temperature, occurrence of dimensional change and distortion can be suppressed.

A holding time at the above processing temperature is preferably in a range of 1 hour or more and 2.5 hours or less. Although depending on the gas ratio in the furnace and the processing temperature, when the processing time is less than 1 hour, nitrogen and carbon do not sufficiently penetrate, and it becomes difficult to form the compound layer 17 having sufficient hardness.

The atmosphere in the furnace during the gas soft-nitriding process can be, for example, a mixed gas of ammonia gas (NH₃), nitrogen gas (N₂), and carbon dioxide gas (CO₂). During the gas soft-nitriding process, atmosphere control using the nitriding potential (K_{N}) as a parameter is not performed.

By the gas soft-nitriding process as described above, the nut 3 is manufactured, which has the compound layer 17 on the outer circumferential surface 10 and in which the inner circumferential surface 11 including a portion where the nut-side ball screw groove 12 is provided is composed of the diffusion layer 16.

In order to further improve corrosion resistance of the outer circumferential surface 10 of the nut 3, when the oxide film of triiron tetroxide is formed on the surface layer of the compound layer 17, after forming the compound layer 17 on the second intermediate material 19, the oxide film can be formed on the surface layer of the compound layer 17 in a state where the cover member 20 is not removed and the inner circumferential surface is not exposed. Specifically, for example, the oxide film can be formed on the surface layer of the compound layer 17 by a so-called blackening process in which the second intermediate material 19 is immersed in a caustic soda (NaOH) aqueous solution heated at a low temperature.

In the nut 3 of the present example, the entire outer circumferential surface 10 and the side surface on the second side in the axial direction of the bottom portion 14 configuring the outer bottom surface are composed of the compound layer 17, and the entire inner circumferential surface 11, the side surface on the first side in the axial direction of the bottom portion 14 configuring the inner bottom surface, and the end surface on the first side in the axial direction of the cylindrical portion 13 are composed of the diffusion layer 16.

In the present example, the gas soft-nitriding processing step is a final step, and no processing is performed on the nut 3 after the gas soft-nitriding processing step. That is, the nut 3 after the gas soft-nitriding processing step is a final product. However, a step of performing the grinding process on the nut-side ball screw groove 12 can also be additionally performed after the gas soft-nitriding processing step.

In the present example, a method for manufacturing the nut 3 has been explained in which the gas nitriding processing step is performed after the shape processing step, and then the gas soft-nitriding processing step is performed, thereby providing the compound layer 17 on the outer circumferential surface 10 and in which the inner circumferential surface 11 including the portion where the nut-side ball screw groove 12 is provided has the diffusion layer 16. However, the nut 3 of the present example is not limited to the method described above and can also be manufactured by other methods.

With the nut 3 of the ball screw device 1 of the present example as described above, slidability of the outer circumferential surface 10 can be improved, and fatigue strength of the nut-side ball screw groove 12 can be ensured.

Since the nut 3 of the ball screw device 1 of the present example has the compound layer 17 on the outer circumferential surface 10 thereof, slidability of the outer circumferential surface 10 configuring the sliding surface 21 can be improved. In the present example, since the nut 3 functions as a piston and is used in a state in which the end portion on the second side in the axial direction is exposed to the outside from the cylinder 9, thereby under conditions where the outer circumferential surface 10 is exposed to outside air and corrosion is likely to occur. However, since the compound layer 17 also has excellent corrosion resistance, occurrence of corrosion on the outer circumferential surface 10 of the nut 3 can be prevented, and reduction in slidability of the outer circumferential surface 10 due to occurrence of corrosion can be prevented. Further, since the compound layer 17 also has excellent wear resistance, wear resistance of the outer circumferential surface 10 can also be improved. In addition, since the diffusion layer 16 exists on the inner side in the radial direction of the compound layer 17 on the outer circumferential surface 10, strength of the sliding surface 21 is also ensured.

Of the nut 3 of the present example, at least the portion of the inner circumferential surface 11 where the nut-side ball screw groove 12 is provided has the diffusion layer 16, which has high hardness, superior toughness, and high resistance to impact. Therefore, fatigue strength of the nut-side ball screw groove 12 can be improved.

In the method for manufacturing the nut 3 of the present example, since the gas nitriding process is performed on the first intermediate material 18, the diffusion layer 16 having a sufficient thickness can be formed on the outer circumferential surface and the inner circumferential surface of the first intermediate material 18. As result, fatigue strength of the nut-side ball screw groove 12 can be sufficiently improved, and fatigue fracture originating from an interior can be effectively prevented in both the outer circumferential surface 10 and the inner circumferential surface 11 of the nut 3.

In the method for manufacturing the nut 3 of the present example, since the gas soft-nitriding process is performed so that at least the inner circumferential surface of the second intermediate material 19 is not exposed to the atmosphere in the furnace, the compound layer 17 is prevented from being formed on the diffusion layer 16 configuring the nut-side ball screw groove 12 for which toughness is required.

### [Second Example]

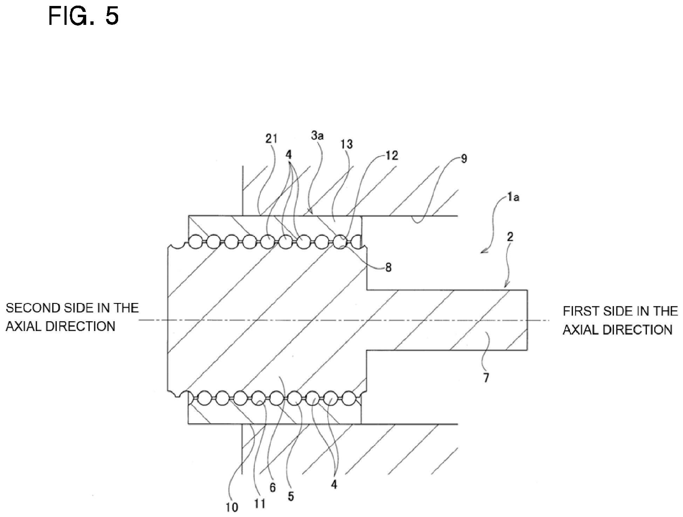

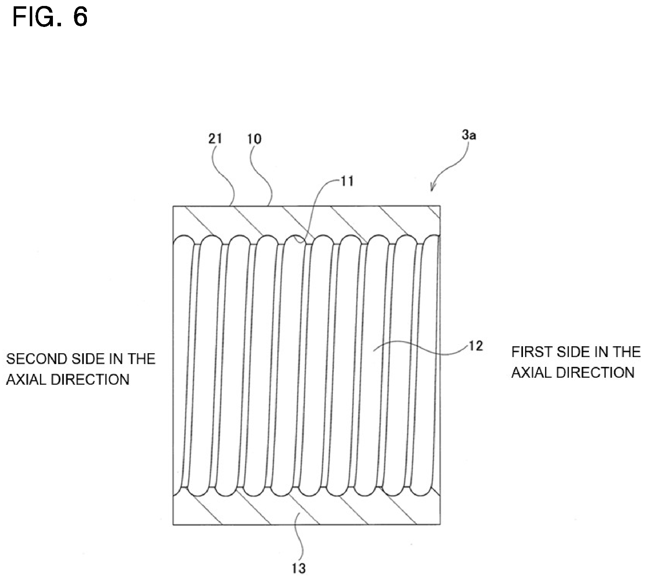

A second example of an embodiment of the present disclosure will be described with reference to FIG. 5 to FIG. 7 (D).

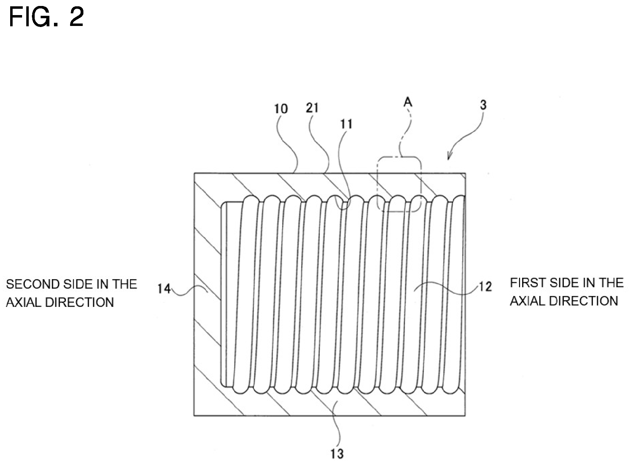

The nut 3a configuring the ball screw device 1a of the present example has a bottomless cylindrical shape. In other words, the nut 3a is composed only of the cylindrical portion 13 and does not have the bottom portion 14 (see FIG. 2).

In the present example as well, the nut 3a is slidably fitted into the cylinder 9 and functions as a part of a piston.

The nut 3a of the present example has the compound layer 17 on the outer circumferential surface 10, and the inner circumferential surface 11 including the portion where nut-side ball screw groove 12 is provided has the diffusion layer 16.

Specifically, the entire outer circumferential surface 10 of the nut 3a of the present example has the compound layer 17, and the entire inner circumferential surface 11 and the end surfaces on both sides in the axial direction have the diffusion layer 16.

The nut 3a of the present example can be manufactured by performing the shape processing step, the gas nitriding processing step, and the gas soft-nitriding processing step, similar to the manufacturing method of the first example of an embodiment of the present disclosure. That is, a first intermediate material 18a having the same dimensions and the same shape as those of the nut 3a is formed by the shape processing step, and after that, a second intermediate material 19a in which a surface thereof is composed only of a structure of the diffusion layer 16 is obtained by the gas nitriding processing step.

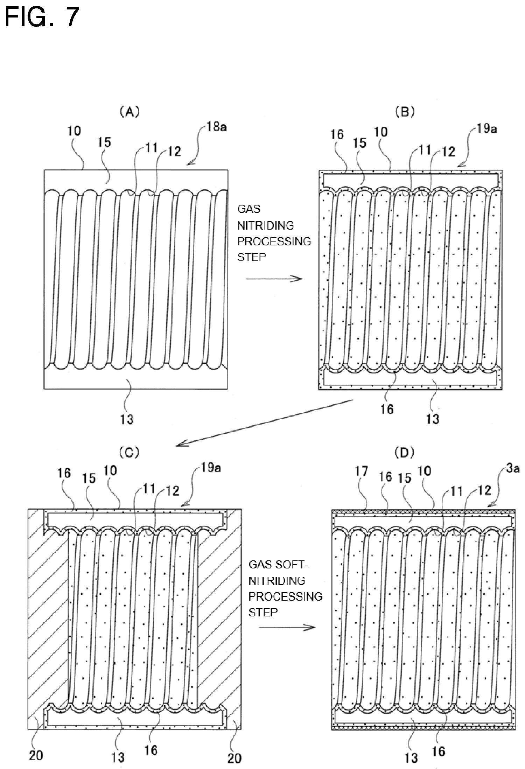

In particular, when manufacturing the nut 3a of the present example, in order to prevent the inner circumferential surface of the second intermediate material 19a from being exposed to the atmosphere in the furnace when performing the gas soft-nitriding processing step, as illustrated in FIG. 7 (C), the end opening portions on both sides in the axial direction of the second intermediate material 19a are closed by cover members 20 so as to prevent the atmosphere in the furnace from entering the inside of the second intermediate material 19a. Specifically, in the illustrated example, for each of the two cover members 20, the screw portion formed on the outer circumferential surface of the small diameter shaft portion is screwed into the nut-side ball screw groove 12, and the large diameter shaft portion is brought into contact with the end surface in the axial direction of the second intermediate material 19a, thereby closing the end opening portions on both sides in the axial direction of the second intermediate material 19a.

In a case of the nut 3a of the present example having a bottomless cylindrical shape as well, since the nut 3a has the compound layer 17 on the outer circumferential surface 10 and the inner circumferential surface 11 including the portion where the nut-side ball screw groove 12 is provided has the diffusion layer 16, slidability of the outer circumferential surface 10 can be improved, and fatigue strength of the nut-side ball screw groove 12 can be ensured.

Other configurations and operational effects of the second example are the same as those of the first example.

In a case of implementing the nut for the ball screw device according to an aspect of the present disclosure, a projection or a key groove for preventing rotation can also be provided on the outer circumferential surface of the nut. In this case, the compound layer may also be formed on surfaces of the projection and the key groove, or only the diffusion layer may be formed by performing masking or the like during the gas soft-nitriding process. However, since the projection for preventing rotation slides with the groove provided on the housing side, it is more preferable to form the compound layer by performing the gas soft-nitriding process.

### REFERENCE SIGNS LIST

1, 1a Ball screw device
2 Screw shaft
3, 3a Nut
4 Balls
5 Load path
6 Screw portion
7 Fitting shaft portion
8 Shaft-side ball screw groove
9 Cylinder
10 Outer circumferential surface
11 Inner circumferential surface
12 Nut-side ball screw groove
13 Cylindrical portion
14 Bottom portion
15 Base material
16 Diffusion layer
17 Compound layer
18, 18a First intermediate material
19, 19a Second intermediate material
20 Cover member
21 Sliding surface

## Claims

1. A nut for a ball screw device, comprising:
an outer circumferential surface having a sliding surface; and an inner circumferential surface provided with a nut-side ball screw groove, and at least the sliding surface of the outer circumferential surface has a compound layer and at least a portion of the inner circumferential surface where the nut-side ball screw groove is provided has a diffusion layer.

2. The nut for a ball screw device according to claim 1, wherein a diffusion layer further exists on an inner side in a radial direction of the compound layer.

3. The nut for a ball screw device according to claim 1 or 2, having a bottomed cylindrical shape.

4. The nut for a ball screw device according to claim 1 or 2, having a bottomless cylindrical shape.

5. The nut for a ball screw device according to any of claims 1 to 4, wherein the inner circumferential surface has a circulation groove.

6. The nut for a ball screw device according to any of claims 1 to 5, wherein the outer circumferential surface entirely has the compound layer.

7. A ball screw device, comprising:
a screw shaft having a shaft-side ball screw groove on an outer circumferential surface thereof and rotationally moving during use;
a nut having a nut-side ball screw groove on an inner circumferential surface thereof and linearly moving during use; and
a plurality of balls arranged between the shaft-side ball screw groove and the nut-side ball screw groove,
the nut being composed of the nut for a ball screw device according to any one of claims 1 to 6.

8. A method for manufacturing a nut for a ball screw device according to any one of claims 1 to 6, comprising:
a step of forming a diffusion layer on a first intermediate material that has a nut-side ball screw groove formed on an inner circumferential surface thereof at least in a portion of the inner circumferential surface where the nut-side ball screw groove is provided and at least a portion of an outer circumferential surface of the first intermediate material, to obtain a second intermediate material, and
a step of forming a compound layer on an outer side in a radial direction of the diffusion layer provided on an outer circumferential surface of the second intermediate material, in a state where at least an inner circumferential surface of the second intermediate material does not come into contact with a furnace atmosphere.

9. A method for manufacturing a nut for a ball screw device according to claim 8, wherein:
the diffusion layer is formed by performing a gas nitriding process on the first intermediate material; and
the compound layer is formed by performing a gas soft-nitriding process on the second intermediate material.
